(19) **Europäisches Patentamt**

**European Patent Office**

**Office européen des brevets**

(11) Veröffentlichungsnummer: **0 223 172**
**A2**

# (12) EUROPÄISCHE PATENTANMELDUNG

(21) Anmeldenummer: 86115542.2

(22) Anmeldetag: 10.11.86

(51) Int. Cl.⁴: **G11B 15/18 , G11B 21/08**

(30) Priorität: 19.11.85 DE 3540901

(43) Veröffentlichungstag der Anmeldung:
27.05.87 Patentblatt 87/22

(84) Benannte Vertragsstaaten:
AT BE CH DE ES FR GB GR IT LI LU NL SE

(71) Anmelder: **Deutsche Thomson-Brandt GmbH**
**Postfach 2060**
**D-7730 Villingen-Schwenningen(DE)**

(72) Erfinder: **Keesen, Werner, Dr.-Ing.**
**Tiestestrasse 5**
**D-3000 Hannover 1(DE)**
Erfinder: **Oberjatzas, Günter, Dipl.-Ing.**
**Langenkampstrasse 42**
**D-3012 Barsinghausen(DE)**
Erfinder: **Hartnack, Wolfgang, Dipl.-Ing.**
**Saarstrasse 22**
**D-3005 Hemmingen 1(DE)**
Erfinder: **Habben, Dieter, Dipl.-Ing.**
**Röntgenstrasse 13**
**D-3000 Hannover 1(DE)**
Erfinder: **Schäfer, Ralf-Detlef, Dipl.-Ing.**
**Im Bultfeld 44**
**D-3005 Hemmingen 4(DE)**
Erfinder: **Peters, Hartmut, Dipl.-Ing.**
**Tiestestrasse 34**
**D-3000 Hannover 1(DE)**

(74) Vertreter: **Einsel, Robert, Dipl.-Ing.**
**Deutsche Thomson-Brandt GmbH Patent-**
**und Lizenzabteilung Göttinger Chaussee 76**
**D-3000 Hannover 91(DE)**

(54) Verfahren zur Aufzeichnung eines Signals auf einem Magnetband.

(57) Für ein Verfahren, bei dem mit einem rotierendem und durch eine Hubbewegung quer zur Bandlängsrichtung bewegten Kopfrad senkrecht zur Bandkante begrenzte Blöcke geschrieben werden, werden durch die Erfindung Sondermodi wie - schneller Vorlauf, Zeitraffung, Zeitdehnung und Standbild erreicht. Zu diesem Zweck ist das Kopfrad in Richtung der Hubbewegung mit erhöhter Hubgeschwindigkeit auf den Anfang eines bestimmten Bildes steuerbar.

Fig.2

## Verfahren zur Aufzeichnung eines Signals auf einem Magnetband

Die Erfindung betrifft ein Verfahren zur Aufzeichnung eines Signals auf einem Magnetband, insbesondere für ein Digitalsignal, bei dem jeweils zeitlich aufeinanderfolgende, gegenüber der Länge des Trägers kurze Spurabschnitte auf dem Träger nebeneinander liegen, wobei die Spurabschnitte etwa parallel zur Trägerkante verlaufen und in Querrichtung zur Trägerkante derart nebeneinander liegen, daß die Begrenzungslinien der gebildeten Blöcke von Spurabschnitten senkrecht oder annähernd senkrecht zur Trägerkante gerichtet sind.

Ein derartiges Aufzeichnungsverfahren dient insbesondere zur Aufzeichnung eines Bildsignals, wobei z.B. ein Bild sich etwa über 12 Spuren erstreckt und 24 zeitlich aufeinanderfolgende Bilder innerhalb eines Blockes in Richtung quer zur Bandkante aufeinanderfolgen. Bei der Aufzeichnung eines Bildsignals ist es bekannt, sogenannte Trick- oder Sondermodi, also Sonder-Betriebsarten vorzusehen. Dazu gehören insbesondere ein schneller Vorlauf mit z.B. zwei-bis zehnfacher Normal-Längsgeschwindigkeit des Bandes für eine Zeitraffung, ein langsamer Vorlauf mit verringerter Band-Längsgeschwindigkeit für eine Zeitdehnung, auch Zeitlupe genannt, entsprechend ein schneller Rücklauf und ein langsamer Rücklauf, eine Standbild-Wiedergabe und eine Einzelbild-Aufnahme.

Bei der Schrägspuraufzeichnung, z:B. nach dem VHS-System, ist jeweils auf einer Schrägspur ein Fernseh-Halbbild aufgezeichnet. Deshalb ist dort die Realisierung derartiger Trickmodi relativ einfach, weil die Videoköpfe bei geänderter Längs-Transportgeschwindigkeit des Magnetbandes entweder eine Schrägspur mehrfach abtasten oder Schrägspuren kreuzen.

Bei dem eingangs beschriebenen Aufzeichnungsverfahren ist die beim Schrägspurverfahren vorliegende Voraussetzung nicht mehr gegeben, da jeweils ein Bild in einem Teilbereich eines Blockes in z.B. 12 Spuren aufgezeichnet ist. Deshalb sind dort die genannten Sondermodi nicht mehr ohne weiteres durchführbar.

Der Erfindung liegt die Aufgabe zugrunde, für das eingangs beschriebene Verfahren mit Bildaufzeichnung die genannten Sondermodi bei einwandfreier oder ausreichender Bildwiedergabe zu ermöglichen.

Diese Aufgabe wird durch die im Anspruch I beschriebene Erfindung gelöst. Vorteilhafte Weiterbildungen der Erfindung sind in den Unteransprüchen beschrieben.

Die erfindungsgemäße Lösung und die einzelnen Sondermodi werden im folgenden anhand der Zeichnung erläutert. Darin zeigen

Fig. 1 die Anordnung der einzelnen Bilder auf dem Magnetband,

Fig. 2 die Anordnung der Bilder innerhalb eines Blockes gemäß einer Weiterbildung der Erfindung,

Fig. 3 ein vereinfachtes Blockschaltbild zur Realisierung der erfindungsgemäßen Lösung und

Fig. 4 ein Beispiel für den schnellen Rücklauf.

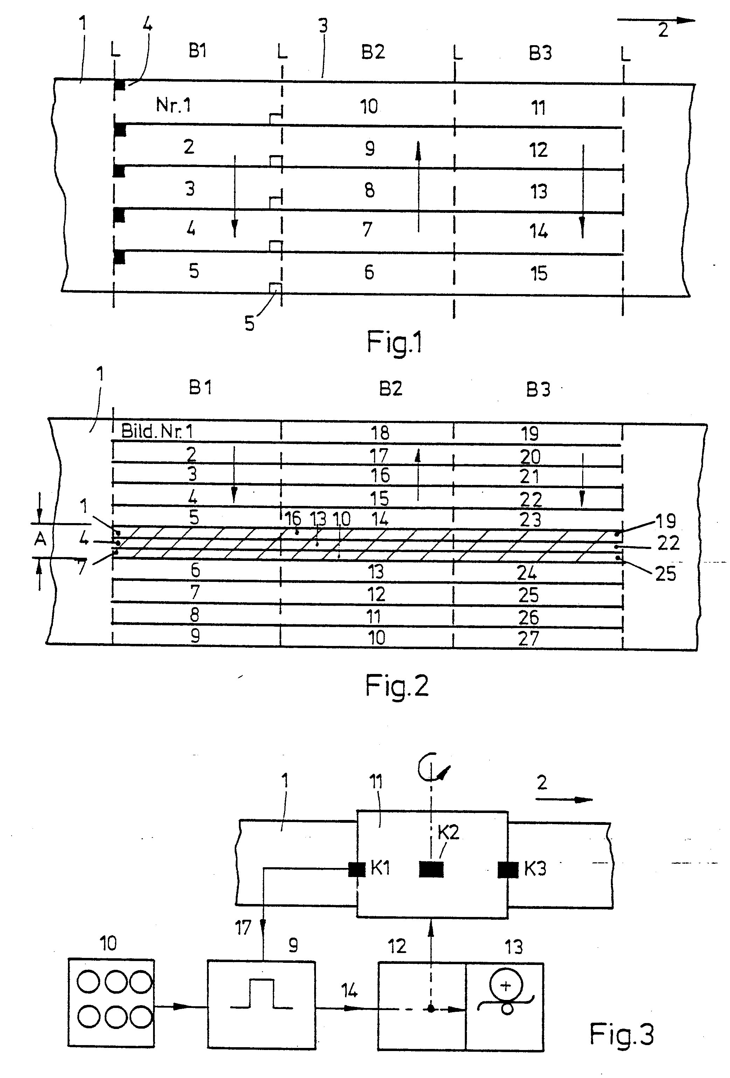

Fig. 1 zeigt ein Magnetband 1, das in Richtung 2 an einem rotierenden Kopfrad vorbeigeführt wird. Dabei werden senkrecht zur Bandkante ausgerichtete Blöcke B1, B2, B3 mit annähernd parallel zur Bandkante 3 verlaufenden Spuren geschrieben. Jeweils 12 Spuren bilden ein vollständiges Fernsehbild. In Fig. 1 sind insgesamt 15 zeitlich aufeinanderfolgende vollständige Bilder dargestellt. In der Praxis beträgt die Zahl der Bilder pro Block etwa 24. Die Zahl der Spuren pro Block beträgt dann 288, wobei ein Block B sich über die hal Block beträgt dann 288, wobei ein Block B sich über die halbe Breite des Bandes 1 erstreckt. Jedes Bild ist durch einen Anfangsimpuls 4 und einen Endimpuls 5 markiert. Diese Impulse können durch das genormte Vertikal-Synchronsignalgemisch gebildet sein. Durch den unterschiedlichen Aufbau dieses Synchrongemisches in geradzahligen und ungeradzahligen Halbbildern hinsichtlich des Abstandes der hinteren Ausgleichsimpulse von dem Vertikalsynchronimpuls ist es möglich, jeweils den Anfang eines vollständigen Bildes zu erkennen. Bei der Aufzeichnung eines digitalen Bildsignals sind die Impulse 4, 5 vorzugsweise durch ein spezielles digitales Signal gebildet. Mittels der Impulse 4,5 kann somit das Kopfrad definiert auf den Anfang eines vollständigen Bildes gesteuert und somit gezielt ein bestimmtes Bild einzeln abgetastet werden. Im folgenden werden verschiedene Sondermodi in der Art der Abtastung beschrieben.

### Zeitdehnung bei Wiedergabe

Für eine Zeitdehnung bei der Wiedergabe, die sogenannte Zeitlupe, wird durch das Ansteuern eines bestimmten Bildes ein Bild, z.B. das Bild Nr. 2 in Fig. 1, gelesen, decodiert und in einen Bildspeicher eingegeben. Aus diesem Speicher wird das Bild jetzt entsprechend der gewünschten Zeitdehnung mehr oder weniger oft wieder ausgelesen. Während des wiederholten Auslesens des Bildes Nr. 2 aus dem Speicher kann die Kopftrommel exakt auf den Beginn des nächsten zu lesenden Bildes Nr. 3 gesteuert werden, das dann wiederum gelesen, in den Speicher eingeschrieben und daraus entsprechend der gewünschten Zeitdehnung beliebig oft ausgelesen wird.

## Standbild-Wiedergabe

Die unter Zeitdehnung beschriebene Maßnahme ermöglicht gleichermaßen eine Standbild-Wiedergabe, da das Auslesen eines Bildes aus dem Speicher beliebig oft erfolgen kann. Es braucht also jeweils nur das Bild mit dem gewünschten Bildinhalt einmal vom Band 1 gelesen zu werden, während die häufige Wiederholung des Bildes für eine beliebig lange Standbildwiedergabe mit dem Speicher erfolgt.

## Zeitraffung bei Wiedergabe

Für die Zeitraffung wird z.B. das Bild Nr. 2 gelesen und wiedergegeben. Danach wird das Kopfrad mit hoher Geschwindigkeit ohne Lesevorgang über mehrere Bilder hinweg weitergesteuert, z.B. auf das Bild Nr. 5 und dann im Anschluß an das Bild Nr. 2 das Bild Nr. 5 gelesen, so daß die Bilder Nr. 3 und Nr. 4 im Sinne einer Zeitraffung wegfallen. Das Kopfrad benötigt für den Sprung vom Bild Nr. 2 bis zum Bild Nr. 5 eine gewisse Zeit. Diese könnte dadurch ausgefüllt werden, daß das Bild Nr. 2 mit einem Speicher erneut gelesen wird, damit keine Signalunterbrechung auftritt. Es ist denkbar, daß z.B. während des wiederholten Lesens des Bildes Nr. 2 das Kopfrad eine schnelle Bewegung bis zu einem weiter entfernten Bild, z.B. Bild Nr. 10, ausführt.

## Zeitraffung bei Aufnahme

Es wird zunächst ein Bild von einer Kamera in einen Speicher eingelesen und dafür gesorgt, daß der Speicher am Ende dieses Bildes nicht überschrieben wird. Das Bild aus dem Speicher wird dann durch entsprechende Steuerung des Kopfrades auf dem Magnetband 1 gemäß Fig. 1 geschrieben. Dann wird, z.B. nach mehreren Sekunden, Minuten oder Stunden das nächste Bild in der gleichen Weise in den Speicher geschrieben und von dem Speicher auf das Magnetband entsprechend der Bildanordnung gemäß Fig. 1 übertragen. Auf diese Weise kann z.B. ein an sich lange dauernder Vorgang, z.B. das Aufblühen einer Blume, entsprechend zeitgerafft auf dem Magnetband 1 geschrieben werden. Jeweils nach dem Schreiben eines Bildes kann dann in den Zwischenpausen, in denen keine Aufnahme erfolgt, das Kopfrad an die Bandstelle gesteuert werden, an der das nächste Bild geschrieben werden soll.

Bei der Änderung des Zeitmaßstabes, also der Zeitraffung oder Zeitdehnung, ist eine Änderung der Geschwindigkeit des Bandtransports in Längsrichtung 2 erforderlich, weil der Ablauf des Signales, d.h. des Bildgeschehens, langsamer oder schneller erfolgen soll. Die Drehzahl des Kopfrades und die Längsgeschwindigkeit in Richtung 2 sind bei Normalbetrieb so aufeinander abgestimmt, daß die Spuren eines Blockes nebeneinander geschrieben werden, also die einzelnen Blöcke quer zur Bandkante 3 ausgerichtete Begrenzungslinien L bilden. Diese Bedingung ist zunächst nicht erfüllt, wenn die Längsgeschwindigkeit von der Normalgeschwindigkeit abweicht. Dann wären die einzelnen Spuren in Längsrichtung des Bandes 1 gegeneinander versetzt. Dies kann dadurch ausgeglichen werden, daß bei Änderung der Bandlängsgeschwindigkeit die Drehzahl der Kopftrommel entsprechend so geändert wird, daß die Begrenzungslinien L der Blöcke B wie bei Normalaufzeichnung senkrecht zur Bandkante 3 stehen.

Fig. 2 zeigt das Band 1 mit drei aufeinanderfolgenden Blökken B1,B2,B3, auf denen die Bilder Nr. 1 -9, Nr. 10 -18 und Nr. 19 -27 mit der durch die Pfeile dargestellten Hubrichtung des Kopfrades geschrieben sind. Etwa in der Blockmitte sind in dem Teilbereich A zusätzlich noch einmal ausgewählte Bilder aufgezeichnet, und zwar im Block B1 die Bilder Nr. 1,4,7, im Block B2 die Bilder Nr. 10,13,16 und im Block B3 die Bilder Nr. 19, 22,25. Durch Abtastung nur des Teilbereiches A der einzelnen Blöcke B läßt sich eine Grobinformation über den Gesamtinhalt des Blockes B gewinnen. Für eine Zeitraffer-Wiedergabe oder einen schnellen Suchlauf braucht daher mit dem Kopfrad nur der Teilbereich A mit entsprechend verringertem Hub des Kopfrades abgetastet zu werden. Die Spuren des Teilbereiches A sind jeweils durch einen Anfangsimpuls und einen Endimpuls markiert, so daß jeweils Anfang und Ende des Teilbereiches A erkennbar sind, im Block B1 also der Beginn des Bildes Nr. 1 und das Ende des Bildes Nr. 7 im Bereich A. Bei normaler Wiedergabe werden zunächst die Bilder oberhalb des Teilbereiches A, also im Block B1 die Bilder Nr. 1 bis 5 und anschließend unterhalb des Bereiches A die Bilder Nr. 6 bis 9 abgetastet. Dabei werden die Bilder Nr. 1,4,7 des Teilbereiches A nicht benötigt, so daß eine Signalunterbrechung während des Bereiches A auftreten würde. Diese Unterbrechung kann durch entsprechende Speicher ausgeglichen werden. Diese Speicher verschieben z.B. die Signale der Bilder Nr. 1 -5 oderhalb des Teilbereiches A an den Anfang des Bildes Nr. 6 unmittelbar hinter dem Teilbereich A.

Die zusätzlich im Teilbereich A aufgezeichneten Bilder werden vorzugsweise nicht mit vollem Informationsgehalt, sondern mit verringerter Auflösung bzw. verringerter Bandbreite aufgezeichnet. Dadurch wird erreicht, daß die Bilder des Teilbereiches A auf dem Band 1 eine geringere Fläche einnehmen als die übrigen Bilder. Das hat den Vorteil, daß die bei normaler Abtastung auftretende Pause während des Bereiches A nicht zu groß wird. Die Dauer des Teilbereiches A bei normaler Abtastung sollte etwa ein Bild nicht überschreiten, damit diese Pause mit Speichern ausgeglichen werden kann. Gemäß Fig. 2 nehmen die Bilder des Teilbereiches A je etwa nur ein Drittel der Fläche eines normalen Bildes außerhalb des Teilbereiches A ein. Die Bilder des Teilbereiches A sind also gegenüber den übrigen Bildern minderwertig. Sie reichen aber aus, um bei einem schnellen Vor-oder Rücklauf den Bildinhalt grob zu erkennen und z.B. eine bestimmte Stelle der Aufzeichnung zu finden.

Die Aufzeichnung mit verringertem Informationsgehalt erfolgt z.B. bei einer Aufzeichnung mit Transformation in den Frequenzbereich und einem DCT-Block (Digitale Cosinus-Transformation) mit 8x8 = 64 Bildpunkten dadurch, daß nur der Mittelwert und die drei bis vier wichtigsten Spektralwerte aufgezeichnet werden.

Fig. 3 zeigt das die Abtastung bewirkende Kopfrad 11 mit vier Magnetköpfen K1,K2,K3,K4, wobei K4 dem Kopf K2 diametral gegenüberliegt. Das Kopfrad 11 rotiert und wird außerdem von der Steuereinheit 12 in Richtung seiner Achse im Sinne der beschriebenen Hubbewegung gesteuert. Eine Steuerschaltung 9 steuert über die Leitung 14 insgesamt drei Werte, nämlich die Hubbewegung des Kopfrades 11, die Drehzahl des Kopfrades 11 und über den Antrieb 13 die Geschwindigkeit der Längsbewegung des Magnetbandes 1 in Richtung 2 jeweils nach den beschriebenen Gesichtspunkten. Die Steuerschaltung 9 wird von der Bedieneinheit 10 jeweils mit der Information darüber versorgt, welcher Sondermodus der einzelnen verschiedenen Betriebsarten erwünscht ist. Die Köpfe K1 bis K4 liefern über die Leitung 17 die Information, daß der Beginn eines aufgezeichneten Bildes erreicht ist. Diese Information kann nur von den Köpfen K1 -K4 entnommen werden, weil nur die Köpfe selbst durch Auswertung der Impulse 4,5 Beginn und Ende eines aufgezeichneten Bildes erkennen können.

Die beschriebenen Spreicher für jeweils ein Bild können durch einen oder mehrere Speicher-IC's des Bausteins IDT 7201 realisiert sein. Derartige IC's sind z.B. beschrieben in dem Datenblatt CMOS PARALLEL IN-OUT FIFO 512"9 + 1024"9Bit der Firma Integrated Device Technology, INC., 3236 Scott Blva., Santa Clara. Die Anwendung derartiger Speicher für eine Standbildwiedergabe ist auch näher beschrieben in der älteren Patentanmeldung P 35 24 128.

### Schneller Rücklauf

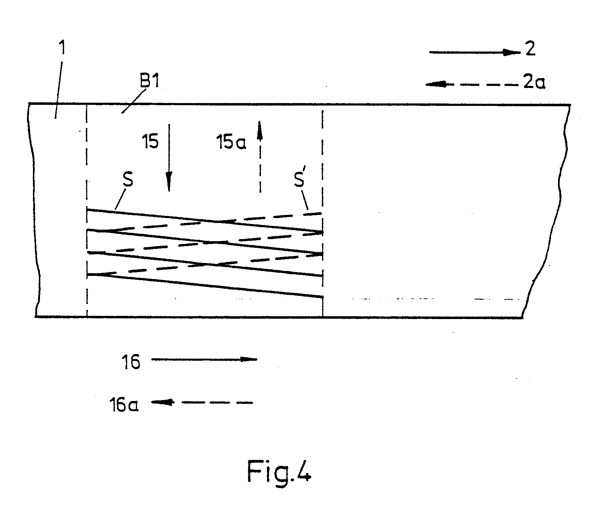

Beim schnellen Rücklauf tritt eine Schwierigkeit auf, die anhand der Fig. 4 erläutert wird. Auf dem Band 1 sind innerhalb des Blockes B Spuren S mit der Hubrichtung 15 geschrieben. Die Schräglage der Spuren S zur Bandkante ergibt sich dadurch, daß beim Schreibvorgang durch Rotation des Kopfrades in Richtung 16 das Kopfrad eine Bewegung in Richtung 15 ausführt. Das Band 1 bewegt sich dabei in seiner Längsrichtung in Richtung 2. Beim schnellen Rücklauf ist die Richtung 2 in die Richtung 2a und die Hubrichtung 15 in die entgegengesetzte Hubrichtung 15a umgekehrt, weil die aufeinanderfolgenden Bilder nacheinander rückwärts, also zum Beginn der Aufzeichnung hin abgetastet werden sollen. Das bedeutet, daß jetzt die von den Köpfen zurückgelegten Spuren S' entgegengesetzt zu den geschriebenen Spuren S geneigt sind und somit den geschriebenen Spuren S nicht mehr folgen können. Eine Abtastung wäre also praktisch nicht mehr möglich. Diese Schwierigkeit läßt sich dadurch vermeiden, daß die Rotationsrichtung des Kopfrades von 16 in 16a umgekehrt wird. Dann schreiben die Köpfe des Kopfrades wieder Spuren S, jedoch jetzt von der rechten Kante bis zur linken Kante des Blockes B1. Das bedeutet, daß alle Zeilen eines Bildes und damit auch das gesamte Bild von rückwärts gelesen werden, also vom Ende der letzten Zeile bis zum Anfang der ersten Zeile eines Bildes. Die Bilder selbst folgenden in der gewünschten, nämlich rückwärts gerichteten Reihenfolge aufeinander, also z.B. in der Bildfolge Nr. 9, 8,7,6,5... gemäß Fig. 2.

Das so gewonnene Signal kann gemäß einer Weiterbildung der Erfindung durch Speicher wieder in ein Signal umgewandelt werden, das jeweils für ein Bild wieder mit Beginn der ersten Zeile beginnt und am Ende der letzten Zeile endet. Zu diesem Zweck werden die Signalwerte eines Bildes in einen Speicher eingelesen und am Ende der Abtastung dieses Bildes in umgekehrter Reihenfolge wieder aus dem Speicher ausgelesen.

Es ist auch möglich, nicht die Rotationsrichtung 16 des Kopfrades umzukehren und statt dessen die sich ergebende Hubrichtung 15a in die Hubrichtung 15 zu ändern, die der Hubrichtung bei der Aufnahme entspricht. Dann könnte man die im Teilbereich A aufgezeichneten Bilder gemäß Fig. 2 in richtiger Richtung, also vom Beginn der ersten Zeile bis zum Ende der letzten Zeile lesen. Diese Bilder hätten dann allerdings die falsche Reihenfolge, nämlich z.B. Nr. 1,4,7 in B1 von Fig. 2 und nicht die Rückwärtsrichtung Nr. 7,4,1. Deshalb müssen dann die Bilder mit den Nr. 1,4,7 in Speicher eingelesen und in der anderen Reihenfolge Nr. 7,4,1 aus dem Speicher ausgelesen werden. Speicher, die eine eingelesene Signalfolge rückwärts, also vom Ende bis zum Anfang wieder auslesen, sind unter der Bezeichnung LIFO (last in first out) bekannt.

## Art der Aufzeichnung

Das Signal kann in der beschriebenen Weise z.B. als analoges Bildsignal durch Frequenzmodulation eines Bildträgers oder auch als digitales Signal aufgezeichnet werden. Vorzugsweise erfolgt die Aufzeichnung nach einer entsprechenden Transformation des Signales im Frequenzbereich. Das bedeutet, daß aus dem Signal eines bestimmten Zeitabschnittes durch eine Transformation die Spektralverteilung, insbesondere nach Fourier, dieses Signals ermittelt und die Amplituden der einzelnen Spektralkomponenten des Signals während dieses Zeitraumes als Digitalsignal aufgezeichnet werden. Die Transformation ist z.B. eine sogenannte DCT = Digitale Cosinus-Transformation. Diese Art der Aufzeichnung im Spektralbereich bietet die Möglichkeit, redundante oder irrelevante Signalanteile zu unterdrücken und dadurch Aufzeichnungsbandbreite oder Speicherfläche einzusparen. Bei dieser Aufzeichnung ist bei der Aufnahme ein Coder zur Umwandlung der Signale im Zeitbereich in Signale im Frequenzbereich und bei der Wiedergabe ein Decoder zur Umwandlung der Signale im Frequenzbereich in Signale im Zeitbereich erforderlich. Ein Verfahren zur Verringerung der mittleren Wortlänge bei akzeptabler Bildqualität pro Bildpunkt bei Übertragung oder Aufzeichnung im Spektralbereich ist z.B. beschrieben in der älteren Patentanmeldung P 35 13 074.

## Besondere Ausführungsformen

Bei einer Ausführungsform der Erfindung werden ausgewählte Bilder mit verringerter Auflösung, Bandbreite oder Information geschrieben. Dabei nehmen die ausgewählten Bilder auf dem Band eine geringere Fläche als die übrigen Bilder ein, z.B. insgesamt die Fläche eines der übrigen Bilder. Die ausgewählten Bilder werden vorzugsweise in einem Teilbereich in der Mitte eines Blockes geschrieben. Der Teilbereich kann auch am Anfang oder am Ende eines Blockes liegen. Beim schnellen Rücklauf wird ein Bild beginnend vom Ende der letzten Zeile bis zum Beginn der ersten Zeile rückwärts gelesen. Dabei werden die abgetasteten Signalwerte eines Bildes in einen Speicher (LIFO) eingeschrieben und in entgegengesetzter Reihenfolge wieder ausgelesen. Für einen schnellen Rücklauf ist vorzugsweise die Hubrichtung des Kopfrades so geändert, daß sie mit der bei der Aufnahme übereinstimmt. Dabei können die gelesenen ausgewählten Bilder in Speicher eingeschrieben und in umgekehrter Reihenfolge wieder ausgelesen werden. Die Signale werden vorzugsweise nach einer Transformation in den Frequenzbereich (DCT) in Form von die Spektralwerte eines bestimmten Zeitraumes darstellenden Digitalsignalen aufgezeichnet.

## Ansprüche

1. Verfahren zur Aufzeichnung eines Signals auf einem Magnetband (1), bei dem mit einem rotierenden und durch eine Hubbewegung quer zur Bandlängsrichtung bewegten Kopfrad (11) senkrecht zur Bandkante begrenzte Blöcke mit etwa parallel zur Bandkante verlaufenden Spuren geschrieben werden, dadurch gekennzeichnet, daß bei der Aufzeichnung mehrerer Fernsehbilder (Nr. 1-5; 6-10; 11-15) in einem Block (B) zur Realisierung von Sonder-Betriebsarten mit abweichendem Zeitmaßstab das Kopfrad (11) in Richtung der Hubbewegung mit erhöhter Hubgeschwindigkeit gezielt auf den Anfang (4) eines bestimmten Bildes steuerbar ist (Fig. 1).

2. Verfahren nach Anspruch I, dadurch gekennzeichnet, daß zur Zeitdehnung oder Standbildwiedergabe bei der Wiedergabe ein Bild vom Band (1) gelesen, in einen Bildspeicher eingeschrieben und wiederholt aus dem Bildspeicher ausgelesen wird und daß während des wiederholten Lesens aus dem Speicher das Kopfrad (11) an den Beginn des nächsten vom Band (1) zu lesenden Bildes gesteuert wird.

3. Verfahren nach Anspruch 2, dadurch gekennzeichnet, daß während des wiederholten Lesens aus dem Speicher der Bandlängstransport (2) gestoppt wird.

4. Verfahren nach Anspruch 1, dadurch gekennzeichnet, daß zur Zeitraffung bei der Wiedergabe ein Bild Nr. n gelesen und das Kopfrad (11) durch eine schnelle Bewegung ohne Lesen für den nächsten Lesevorgang bis an den Anfang eines Bildes Nr. n + x gesteuert wird und daß während der schnellen Bewegung für eine ununterbrochene Wiedergabe das Bild Nr. n mit einem Bildspeicher wiederholt wird.

5. Verfahren nach Anspruch 1, dadurch gekennzeichnet, daß zur Zeitraffung bei der Aufnahme ein aufgenommenes Bild in einen Speicher eingelesen, der Speicher danach gegen Überschreiben gesperrt und dann das Signal vom Speicher nach entsprechender Positionierung der Kopftrommel (11) auf das Band (1) geschrieben wird und daß während der Zeit, in der keine Aufnahme erfolgt, die Kopftrommel (11) an die Stelle des Bandes (1) gesteuert wird, an der das nächste Bild geschrieben werden soll.

6. Verfahren nach Anspruch 1, dadurch gekennzeichnet , daß bei einer Änderung der Geschwindigkeit des Bandtransports in Längsrichtung (2) die Drehzahl der Kopftrommel (11) entsprechend so geändert wird, daß die Begrenzungslinien (L) der Blöcke (B) quer zur Bandkante (3) verlaufen.

7. Verfahren nach Anspruch 1, dadurch gekennzeichnet, daß innerhalb eines Blockes (B) mit n (9) Bildern in einem Blockteilbereich (A) unmittelbar nacheinander einige ausgewählte, gleichmäßig über den Block (B) verteilte Bilder (Nr. 1,4,7; 10,13,16; 19,22,25) der n Bilder zusätzlich geschrieben werden (Fig. 2).

8. Verfahren nach Anspruch 7, dadurch gekennzeichnet, daß für eine Gruppe von Bildpunkten (8x8 = 64) nach einer Transformation in den Spektralbereich (DCT) nur der Mittelwert und die wichtigsten (3 -4) Spektralwerte aufgezeichnet werden.

9. Verfahren nach Anspruch 7, dadurch gekennzeichnet, daß bei der normalen Abtastung eines Blockes (B) die während des Blockteilbereiches - (A) unterbrochene kontinuierliche Folge zeitlich aufeinanderfolgender Bilder (Nr. 1 -27) durch Speicher ausgeglichen wird (Fig. 2).

10. Verfahren nach Anspruch 1, dadurch gekennzeichnet, daß für einen schnellen Rücklauf die Rotationsrichtung (16) des Kopfrades (11) geändert und ein Bild beginnend vom Ende der letzten Zeile bis zum Beginn der ersten Zeile rückwärts gelesen wird (Fig. 4).

B1    B2    B3

| | B1 | B2 | B3 |
|---|---|---|---|
| | Nr.1 | 10 | 11 |
| | 2 | 9 | 12 |
| | 3 | 8 | 13 |
| | 4 | 7 | 14 |
| | 5 | 6 | 15 |

Fig.1

| | B1 | B2 | B3 |
|---|---|---|---|
| | Bild. Nr.1 | 18 | 19 |
| | 2 | 17 | 20 |
| | 3 | 16 | 21 |
| | 4 | 15 | 22 |
| | 5 | 16 13 10   14 | 23 |
| | 6 | 13 | 24 |
| | 7 | 12 | 25 |
| | 8 | 11 | 26 |
| | 9 | 10 | 27 |

A

Fig.2

K1    K2    K3

Fig.3

Fig.4